(19)

Europäisches
Patentamt
European
Patent Office
Office européen
des brevets

(11) **EP 2 822 325 A1**

(12) **EUROPEAN PATENT APPLICATION**

(43) Date of publication:
**07.01.2015 Bulletin 2015/02**

(21) Application number: **13382266.8**

(22) Date of filing: **03.07.2013**

(51) Int Cl.:
*H04W 40/20* (2009.01)  *G01C 21/34* (2006.01)
*G01S 5/00* (2006.01)  *H04W 4/02* (2009.01)
*H04W 40/24* (2009.01)  *H04W 64/00* (2009.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Telefonica Digital España, S.L.U.
28013 Madrid (ES)**

(72) Inventors:
• **Kwak, Haewoon
  Madrid (ES)**
• **Frias Martinez, Enrique
  Madrid (ES)**

(74) Representative: **Gonzalez-Alberto Rodriguez,
Natalia
GARRIGUES IP, S.L.P.
Hermosilla, 3
28001 Madrid (ES)**

(54) **Method, system and computer-readable storage mediums for estimating a route**

(57) The method estimating said route between an origin location and a destination location of a cell phone user requesting said route by using a computer device receiving as inputs location data from a base station tower, said computer device: creating a plurality of perturbations of at least one of said computed origin or said destination location within said base station tower coverage; for each perturbation created querying a route calculation engine, based on geospatial data, to calculate a route between said perturbations or between said perturbations and said origin or destination and obtaining a list of routes, and choosing among said list of routes an optimal route by maximizing an utility function that assesses the efficacy of each route of said list of routes by using user's location data being performed within certain distance of said calculated routes.

**Fig. 1**

**Description**

<u>Field of the art</u>

The present invention relates to a method, a system and computer-readable storage mediums for estimating a route, and more particularly, this invention relates to estimating a route using location data of a wireless communication network.

<u>Background of the invention</u>

Location data developed by a wireless communication network, such as Call detail records (CDRs), GPS traces, hand-off patterns, etc. have become one of the major data sources for analyzing human mobility.

In document EP 1437013 (B1) it is disclosed a traffic information mechanism that is capable of using this type of data generated routinely by wireless telephony communication networks. Location estimates are made based on processing the operational data which can be combined, as the present invention does, with computerized street maps to measure the time it takes to get from one geographic area to another. It also aggregates and analyses anonymous data from devices allowing determining real-time and historical travel times and velocities between cities, intersections and along specific routes.

On another hand, in document US 2012115475 (A1) are disclosed some methods and apparatuses that receive mobile phone operational data indicative of user equipment location to perform travel estimation based on said mobile phone operation data. The traffic estimation includes interpolating the data associated with one or more individuals in a population to estimate intermediate positions of a trajectory of each of the one or more individuals for a specified time period based on a shortest path mesh sequence estimation algorithm.

However, the use of the mobile phone operational data has two inherent limitations. One is that the location is captured only when a call takes place (i.e., low resolution), and the other is that the captured location only approximates the actual position (i.e., coarse granularity) which make it hard to estimate the street-level commuting route between two user locations, for instance a user home and work.

The accurate estimation of street-level commuting routes, instead of the frequent sequence of cell towers or the probability distribution of placement, can bring more sophisticated applications for location-based service, user profiling, target advertisement, traffic engineering, or urban planning.

There are also some scientific studies that have tried to solve this problem. For instance, Olof Görnerupin [1] proposed to count how many times individuals contact to each cell tower or base station and extract common (frequently visited) sequence of tower by using CDRs. That is, the cell towers that people usually contact to can be identified, but they do not know the geographic features, such as where the road is. The problem here is the fact that an individual who has a mobile phone can be anywhere in the cell tower coverage. As a consequence, the method presented cannot estimate the street-level route but the tower-level route

On another hand, Becker et. al. [2] tried to estimate which road people should take by using hand-off patterns instead of CDRs. Hand-off patterns are the network signal patterns recorded when an individual moves from one cell tower to the other cell. Authors collected hand-off patterns when they drove along each road, and they found that hand-off patterns are consistent for each road. Based on these 'in-advance' references, authors estimate the individuals' route. The problem is that it cannot apply to every type of location data, it only apply to hand-off data, which is more detail data. Second, authors need to collect such hand-off patterns by driving each road and collecting hand-off signals by themselves.

The present invention overcomes the deficiencies of the existing methods and systems by providing a scalable solution to estimate a street-level commuting route for each individual by using any location data.

[1] O. Görnerup. Scalable mining of common routes in mobile communication network traffic data. In Proceedings of the 10th international conference on Pervasive Computing, Pervasive'12, pages 99-106, 2012.
[2] R. A. Becker, R. Caceres, K. Hanson, J. M. Loh, S. Urbanek, A. Varshavsky, and C. Volinsky. Route classification using cellular handoff patterns. In Proceedings of the 13th international conference on Ubiquitous computing, Ubi-Comp '11, pages 123-132, 2011

<u>Summary of the Invention</u>

To achieve the above, according to a first aspect, the invention provides a method for estimating a route, between an origin location and a destination location of a cell phone user requesting said route by using a computer device that receives as inputs location data, such as GPS traces, hand-off patterns, network strength data or location-based service data or geotagged comments in a social network, from a base station tower. On contrary of the known proposals, the method of the first aspect comprises using said computer device for:

> a) creating a plurality of perturbations of at least one of said computed origin or said destination location within said base station tower coverage;
> b) for each perturbation created querying a route calculation engine based on geospatial data, preferably stored in a geospatial database accessed via the internet, to calculate a route between said perturbations or between said perturbations and said origin or destination and obtaining a list of routes, and
> c) choosing among said list of routes an optimal route by maximizing an utility function that assesses the efficacy, in terms of time or distance, of each route of said list of routes by using user's location data being performed within certain distance of said calculated routes.

According to an embodiment of the invention, the method can create the number of perturbations for both the origin and destination locations. For instance, the origin location can be the home location of said user and the destination location can be the work location of said user.

The obtained list of routes allows the identification of the geographical features of the routes. Furthermore, the optimal route preferably will include its duration and/or its total distance.

For each perturbation created, according to a preferred embodiment, it is added at least one intermediate point in order to improve the choosing of the optimal route, wherein said at least one intermediate point comprises a place where the user makes many calls and/or a popular or common location concerning the user and/or a highway where the user travels. In order to avoid overfitting, the addition of the intermediate points will be limited to a defined number. Preferably, the intermediate point is identified by means of computing an intermediate point score $A(T_i)$ for each base station tower $T_i$ by means of applying the following equation:

$$A(T_i) = (\frac{c(T_i)}{C})^n$$

wherein

$A(T_i)$ is the computed intermediate point score;

$T_i$ represents a base station tower; and

C represents the proportion of location data involved in the base station tower $T_i$.

Furthermore, according to yet another embodiment, perturbations can also be created for the added intermediate point or points.

According to a second aspect, the invention provides a system for estimating a route, between an origin location and a destination location of a cell phone user requesting said route, the system including a preprocessing unit that receives as inputs, location data from a base station tower. On contrary of the known proposals, the system of the second aspect further includes: a perturbation unit computing perturbations of at least one of said computed origin or said destination location within said base station tower coverage; a querying unit querying, for each perturbation created, a route calculation engine, based on geospatial data, to calculate a route between said perturbations or between said perturbations and said origin or destination and obtaining a list of routes; and a route selection unit to choose among said list of routes an optimal route by maximizing an utility function calculated by a utility function computing unit, wherein said utility function assesses the efficacy, in terms of time or distance, of each route of said list of routes by using user's location data being performed within certain distance of said calculated routes.

The queries can be sent by a query scheduler of said querying unit in order to send queries to said route search calculation engine in a distributed manner, depending on the characteristics or limitations of the route calculation engine, so that the global performance of the estimation is improved.

According to a third aspect, the invention provides a computer-readable storage medium comprising instructions to cause said computer device to carry out step a) of claim 1.

In yet another embodiment, the invention also provides a computer-readable storage medium comprising instructions to cause said computer device to carry out step c) of claim 1.

Brief Description of the Drawings

The previous and other advantages and features will be more fully understood from the following detailed description of embodiments, with reference to the attached, which must be considered in an illustrative and non-limiting manner, in which:

Fig. is an example of the added perturbation (P) in the base station location of the origin and the destination. H and W denote home (origin) and work (destination) locations respectively.

Figs. 2A and 2B illustrate the example in which the perturbations (P) are added either at the origin (Fig. 2A) or at the destination (Fig. 2B), according to some embodiments of the present invention.

Fig. 3 is an example illustrating the addition of intermediate points (AP) to be considered in the route estimation, according to an embodiment of the present invention.

Fig. 4 is an example of the architecture followed by the proposed method.

Detailed Description of Preferred Embodiments

The present invention proposes a scalable method to estimate the street-level commuting route using location data, such as call detail records, GPS traces, hand-off patterns that are network signatures collected when a user moves from one cell tower to the other tower, network strength data or location-based service data such as check-in to venues in a Foursquare® system or geotagged comments in a social network.

In this particular embodiment as a location data it will be considered the use of call detail records or CDRs and the origin and destination locations will refer to the home H and work W locations of a user.

In order to estimate the commuting route, it is estimated home H and work W locations of said user. From CDRs, there are many methods to estimate where home and work locations are. The challenging issue here is that in most of cases, when dealing with CDRs it is hard to know the accurate home H and work W locations of individuals because CDRs are always fully anonymized for the privacy concerns. Although many techniques are proposed to address this problem, the invention uses the method introduced by Isaacman S. et. al. *"Identifying important places in people's lives from cellular network data"* due to simplicity but high accuracy. Isaacman method basically finds clusters of base stations (or cell towers) that are involved in the largest number of calls during home and work hours.

Then, the proposed method works in the three mentioned steps, that is, it creates perturbations P of said home H and work W locations within the coverage area of a base station tower; identifies a route between each pair of both locations H and W through route calculation engines based on web mapping and chooses the route that maximizes the normalized number of said CDRs within certain distance from the route.

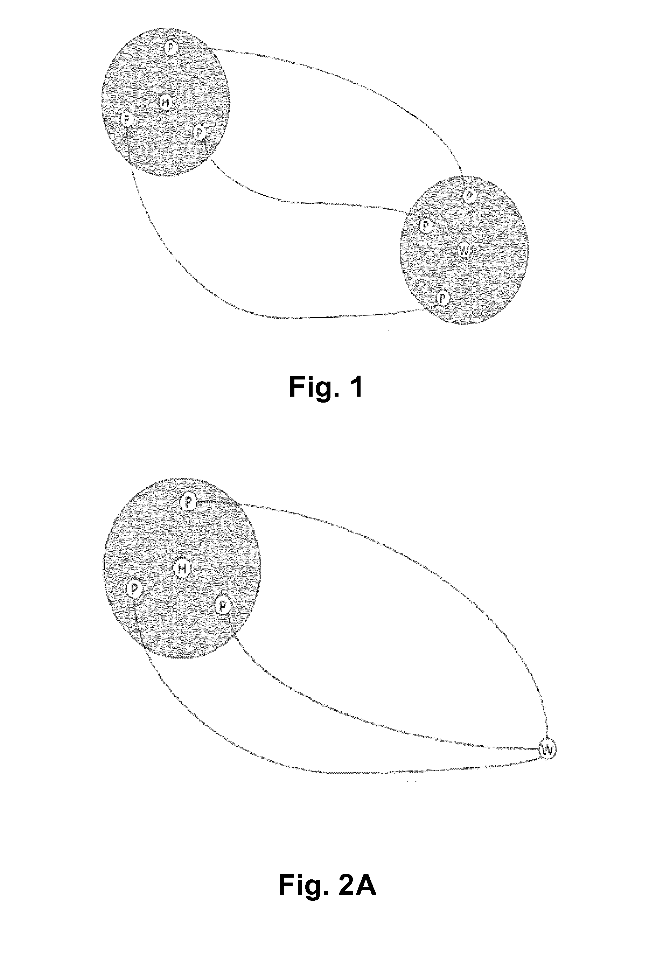

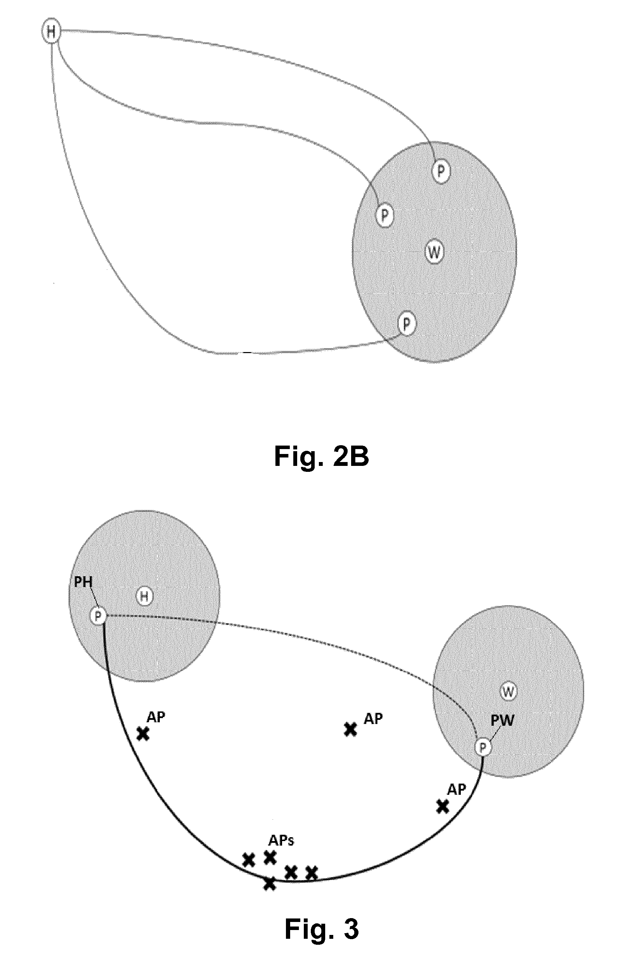

For each user who contact to a certain base station, their location is expressed as longitude and latitude of the base station. The real location of the user can be anywhere within the coverage of the base station tower. To consider these characteristics, the invention intentionally adds those perturbations P, i.e. noises, to the base station location of the origin H and the destination W presented in Fig. 1. The grey area represents the coverage of the base station tower, and the black cross sign denotes where the user makes calls. According to other embodiments, the perturbations can be applied to either of two locations, H and W, as is represented in Figs. 2A and 2B. This is for the less computation of perturbations P. Instead of picking randomly generated N perturbations from home H and work W each, making perturbations P only for home H or only for work W requires a half of computation costs (time and computer power).

Within a circular area whose centre is the latitude and longitude of a base station and a radius represents the coverage of the tower, the invention creates N pairs of perturbed locations from the original location. N could be any number, and it is directly related with the complexity of the geography in that region because N reflects the possibility of locations / routes of users. For instance, in case there is only one big highway that passes from one to the other location, the invention wouldn't need to make a large number of perturbations P because that user has no other choices except taking that highway. On the other hand, if there are many streets in that cell region, the invention would take higher N because it will consider all possibilities with those streets. For instance, with CDR data collected from two well-developed cities, it is sufficient that N > 20. Then, for each pair of perturbed home H and work W locations, the route between both locations is queried to the route calculation engine, in this particular case being based on web mapping, and it is obtained the routes represented by the solid lines.

Web mapping is a standard protocol for serving georeferenced map images generally over the Internet that are generated by a map server using data from a geospatial database. This type of service is used for identifying an optimal route satisfying all geographical features between the user home H and work W locations. For instance, Bing Maps®, Google Maps®, or Nokia Maps® are popular route calculation engines based on web mapping which offers a fine-grained navigation with a street-level resolution. These route calculation engines usually cover a variety of nations and continents, so the proposed method becomes scalable by using them. From the route calculation engine, it can be obtained not only the detail route between two locations but also the duration and the distance of the route. Moreover, it can find different routes according to the corresponding means of transportation.

Among the N routes provided by the route calculation engine for N pairs of perturbed home H and work W, the proposed method chooses the most probable route by assessing, for instance, the explanatory power of each route for the electronic footprints left in CDRs. The explanatory power of each route is defined as a variety form of utility functions. The utility function, $U_i$, computes the utility of each route, $r_i$, according to different criteria. For example, it can simply compute the portion of calls near the route, as in the following equation

$$U(r_i) = \frac{c_i}{C} \quad (1)$$

where C is the total number of calls that the user is involved in during commuting hours, and the number of calls made during commuting hours within d meters from the route, $c_i$. The right side of the equation can be transformed into other forms by power, as in equation 2, for different weighting scheme.

$$U(r_i) = \left(\frac{c_i}{C}\right)^n \quad (2)$$

If n=2, the difference of $c_i/C$ becomes much higher when $c_i$ becomes bigger, as compared with $n$=1. If n=3, the difference becomes much higher.

The more general form of the utility function is like equation 3

$$U(r_i) = \alpha\left(\frac{c_i}{C}\right) + \beta\tau + \epsilon \quad (3)$$

wherein both $\alpha$ and $\beta$ are parameters to give different weight to each term. $\tau$ is the term of taking into account the temporal characteristics. This includes from when calls are made to what the relative order of calls are. For example, it is possible to give more weight to morning calls than evening calls because the route from home H to work W might be more stable than that from work W to home H. $\epsilon$ is the error term. The error range of the measurements is considered by explicitly considering said $\epsilon$ term. Whilst the resolution of the route estimation can be enhanced by decreasing the distance $d$ of a route, the straightforward choice is setting $d$ as the diameter of the average coverage of a base station tower in an urban environment. After the computation of the utility function for N routes is finished, the most probable route, $r^*$, that maximizes the utility function $U$ can be chosen:

$$r_* = \underset{r}{\operatorname{argmax}}|U(r)| \quad (4)$$

As a particular example, U is computed for the three routes in Fig. 1. The results are showed in Table 1. Wherein three routes are labeled as $r_0$, $r_1$, and $r_2$ from the top to the bottom: $U(r_0)$ = 2/10 = 0.2, $U(r_1)$ = 1/10 = 0.1 and $U(r_2)$ = 6/10 = 0.6. As a result, $r_2$ is selected because it can explain the highest number of calls.

Table 1 Example of computing the utility function U

| Route $r_i$ | Calls near the route $c_i$ | Utility function value, $U(r_i)$ |
| --- | --- | --- |
| $r_0$ | 2 | 2/10 = 0.2 |
| $r_1$ | 1 | 1/10 = 0.1 |
| $r_2$ | 6 | 6/10 = 0.6 |

According to an alternative, as previously said, different types of location data can be used for computing the utility function U. For instance, it can be used GPS traces and/or hand-off patterns and/or network strength data that measures the signal strength from the near towers, and/or even location-based service data, such as check-in to venues in Foursquare®, or geotagged tweets of a social network such as Twitter®. In each case, the utility function should be adapted in such location data as in equation 5.

$$U(r_i) = \alpha_1\left(\frac{c_i}{C}\right) + \alpha_2\left(\frac{g_i}{G}\right) + \alpha_3\left(\frac{l_i}{L}\right) + ... + \alpha_n\left(\frac{h_i}{H}\right) \qquad (5)$$

where C is the location data corresponding to CDRs, G corresponds to GPS data, L is the location-based service data, H is the hand-off pattern data, and so on with the rest of location data that can be used for computing the utility function. The numerator in each term is the trace captured near the route, $r_i$. The parameter, $\alpha_i$, in each term shows the different weight for each data. In general, the data of finer resolution might have the higher weight.

In the exemplary embodiment showed in Fig. 1, intermediate points or anchor points AP can be added, as a perfection of the present invention, usually where the user is likely to pass through, as illustrated in Fig. 3. Preferably, a candidate anchor point AP would be where people or users make many calls, where a popular location is, or where the highway is. The route calculation engine gives the optimal route between two locations. Although it may happen that the optimal route change due to traffic conditions, road availability, or individual preference. For that reason, it is important to consider other alternative points in order to allow computing the optimal route between the locations. For instance, when a user brings one's children to their school, one's commuting route should pass through those schools, even if the school is not close to the optimal route. Other possible scenarios like this could be: visiting a family after work, going to gym after work, having breakfast before work in a café, etc.

The dashed line in Fig. 3 is the optimal route between perturbed home PH and work PW locations satisfying geographic features, and the solid line is the route that considers the anchor point where the individual makes many calls. Adding anchor points to the route makes the route more realistic.

In order to define said anchor points APs an anchor score, $A(T_j)$, is defined for each base station tower $T_i$, as the proportion of location data, in this case calls, involving the base station tower $T_i$ as in equation 6.

$$A(T_i) = \frac{c(T_i)}{C} \qquad (6)$$

As similar with the previous example, the term in right-hand side could be a quadratic form or polynomial form as in equation 7

$$A(T_i) = \left(\frac{c(T_i)}{C}\right)^n \qquad (7)$$

After computing the anchor score of each tower $A(T_j)$, if anchor score of base station tower *1* is more than threshold *t*, the method sets the base station tower *1* as an anchor point AP that a user must go through. As a result, the number of anchor points APs could be more than one when anchor score of multiple towers are more than threshold t. During this process, the number of anchor points APs can be limited to a specific number in order to avoid over-fitting.

Preferably, anchor points APs are added to the route by two different methods. One way is explicitly dividing the route by the anchor point AP; first, the route is found between home H and the anchor point AP, and the anchor point AP to home H. In this case, it is possible to make perturbations P of the anchor point AP as well. It could bring more accurate route but requires more requests to route calculation engines. The other way is querying web-mapping services to go through the anchor point AP. In this case, it does not consider the variations on anchor points APs within base station coverage, so it could be less accurate than the first mode, but it requires fewer requests to route calculation engines. It is a trade-off between the accuracy and the time (resource) complexity relating with route calculation engines.

On another hand, there are many methodologies to estimate the basic demographic information of users based on CDRs. For instance it is possible that for a user making more and longer calls, the user is likely to be a woman rather than a man. Through this process it is not tried to de-anonymized but add another layer of information of anonymous users, even preserving the privacy of basic characteristics of users based on CDRs after this estimation. This basic information could be used for enhancing the accuracy of the estimation because such demographic information is an indicator of user's preference.

For example, in a scenario where the volume of CDRs is not enough the route estimation is very sensitive to few irregular calls because there are not many evidences (calls) along the commuting routes. Thus, it is not surprising even multiple routes, $r_A$, $r_B$, and $r_C$, have the same values of utility function. However, the demographic information can help to pick one of three routes. Considering that $r_A$ is going through a gym, $r_B$ is going through a cosmetic center, and there are nothing special around $r_C$, if a user is a man, it is possible to think $r_A$ has higher probability of being the commuting route of the user than $r_B$ or $r_C$. If the user is a woman, we think $r_B$ as a candidate route. More sophisticated estimations' can be done with detailed information of user's preference.

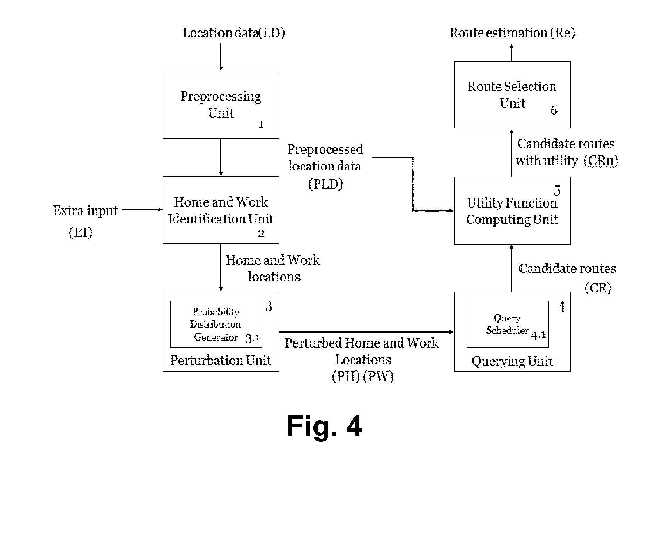

In reference know to Fig. 4, it is showed an overview of the implementation of the present invention. First, raw location data LD, for instance CDRs, are preprocessed in preprocessing unit 1 which filters noises or errors from said CDRs. With preprocessed CDRs, the home and work identification unit 2 runs. This unit 2 identifies home H and work W locations based on CDRs. Here is possible to consider extra input EI, such as billing addresses. Once home H and work W locations are identified, perturbation unit 3 makes perturbation of home and work locations. Perturbed locations can be generated from some probability distributions, such as Gaussian or uniform distribution, within cell coverage. The probability distribution generator 3.1 helps this process. Then, the querying unit 4 queries perturbed home and work locations PH and PW to route calculation engine. These queries can be sent by a query scheduler 4.1 in distributed manner, for instance, every certain period of time depending on the characteristics or limitations of the route calculation engine, for the performance improvements. If the bottleneck is the rate limit of the route calculation engine, the query scheduler 4.1 can send queries to other route calculation engines. Moreover, considering the rate limit of the route calculation engines, query scheduler 4.1 can send queries to a variety of route calculation engines in round-robin manner, random manner, etc. After obtaining candidate routes CR between perturbed home and work locations PH and PW, utility function computing unit 5 calculates the utility function for each route with preprocessed CDRs. Route selection unit 6 chooses the best one route Re according to the utility of each route CRu. Then, the route estimation of the user finishes.

The proposed method could be useful for traffic analysis and accurate provisioning. For instance, instead of the large-scale survey of commuters, the method of the first aspect can suggest where the new road is constructed. Through the location data collected in that city, identifies all routes of commuters and extract routes passing street that is always packed with many cars. Then, it gets the accurate O-D matrix of people whose commuting path is going through the street. By considering their commuting routes, the method can suggest a new road location maximizing the number of individuals that are helped by the new road.

On another hand, it can also be useful for public transit optimization. From the location data, for instance CDRs, this method can accurately identify how many people use which means of transportation. Then, it can optimize the public transit systematically by considering the origin-destination of individuals. Or it can also be used for target advertising in order to identify potential customers. For instance, through this method, it can be known who passes on the street near a store, so discount coupons/advertisement can be sent to exactly those users who not only live near those stores but also commute near them.

Finally, the proposed method can be applied as a means of car sharing between users having a similar commuting route.

**Claims**

1. A method for estimating a route, between an origin location and a destination location of a cell phone user requesting said route by using a computer device that receives as inputs location data from a base station tower, **characterized in that** the method comprises using said computer device the steps of:

   a) creating a plurality of perturbations of at least one of said computed origin or said destination location within said base station tower coverage;
   b) for each perturbation created querying a route calculation engine, based on geospatial data, to calculate a route between said perturbations or between said perturbations and said origin or destination and obtaining a list of routes; and
   c) choosing among said list of routes an optimal route by maximizing an utility function that assesses the efficacy, in terms of time or distance, of each route of said list of routes by using user's location data being performed within certain distance of said calculated routes.

2. A method according to claim 1, comprising creating said number of perturbations for both said origin and said destination locations.

3. A method according to claims 1 or 2, comprising obtaining at least the duration and/or the distance of said optimal route.

4. A method according to claim 3, wherein said list of routes obtaining further comprises identifying the geographical features of the routes.

**5.** A method according to claim 1, wherein said geospatial data is stored in a geospatial database accessed via the internet.

**6.** A method according to claims 1 or 2, further comprising, for each perturbation created, adding at least one intermediate point in order to improve the choosing of the optimal route, wherein said at least one intermediate point comprises a place where many user calls are made and/or a common location for the user and/or a highway on which the user travels.

**7.** A method according to claim 6, wherein said at least one intermediate point to be added is identified by means of computing an intermediate point score $A(T_i)$ for each base station tower $T_i$ by means of applying the following equation:

$$A(T_i) = (\frac{c(T_i)}{C})^n$$

wherein
$A(T_i)$ is the computed intermediate point score;
$T_i$ represents a base station tower; and
C represents the proportion of location data involved in the base station tower $T_i$.

**8.** A method according to claim 6, further comprising creating a number of perturbations of the at least one added intermediate point.

**9.** A method according to claim 6, wherein the addition of said at least one intermediate point is limited in order to avoid over-fitting.

**10.** A method according to claim 1, wherein said location data comprises one of a: call detail records, GPS traces, hand-off patterns, network strength data or location-based service data or geotagged comments in a social network.

**11.** A method according to previous claims, wherein said origin location comprises the home location and/or the work location of the user.

**12.** A system for estimating a route, between an origin location and a destination location of a cell phone user requesting said route, said system comprising a preprocessing unit (1) that receives as inputs, location data (LD) from a base station tower, **characterized in that** further comprises:

- a perturbation unit (3) to compute perturbations of at least one of said computed origin or said destination location within said base station tower coverage;
- a querying unit (4) to query, for each perturbation created, a route calculation engine based on geospatial data to calculate a route between said perturbations or between said perturbations and said origin or destination and obtaining a list of routes; and
- a route selection unit (6) to choose among said list of routes an optimal route by maximizing an utility function calculated by a utility function computing unit (5), wherein said utility function assesses the efficacy, in terms of time or distance, of each route of said list of routes by using user's location data being performed within certain distance of said calculated routes.

**13.** A system according to claim 12, wherein said querying unit (4) includes a query scheduler (4.1) to send said queries to said route search calculation engine depending on the characteristics or limitations of the latter.

**14.** A computer-readable storage medium comprising instructions to cause said computer device to carry out step a) of claim 1.

**15.** A computer-readable storage medium, according to claim 14, comprising instructions to cause said computer device to carry out step c) of claim 1.

**Fig. 1**

**Fig. 2A**

**Fig. 2B**

**Fig. 3**

Location data(LD)          Route estimation (Re)

```
                 |                                           ↑
        ┌────────────────┐                          ┌────────────────┐
        │  Preprocessing │                          │ Route Selection│
        │      Unit      │                          │      Unit       │
        │              1 │                          │              6 │
        └────────────────┘                          └────────────────┘
                 |                                           ↑
                 |          Preprocessed                     |  Candidate routes
                 |          location data                    |  with utility (CRu)
                 |            (PLD)    ──────────┐            |
                 ↓                               │   ┌────────────────┐
Extra input   ┌────────────────────┐            │   │             5  │
──────────→   │   Home and Work    │            └──→│Utility Function│
  (EI)        │ Identification Unit │                │ Computing Unit │
              │                  2 │                └────────────────┘
              └────────────────────┘                         ↑
                 |     Home and Work                         |  Candidate routes
                 |       locations                           |     (CR)
                 ↓                                            |
        ┌────────────────────┐                      ┌────────────────────┐
        │ ┌────────────┐ 3  │                       │ ┌────────────┐ 4  │
        │ │ Probability│    │  Perturbed Home and Work│ │  Query   │    │
        │ │Distribution│    │ ─────────────────────→  │ │Scheduler │    │
        │ │Generator 3.1│   │      Locations          │ │       4.1│    │
        │ └────────────┘    │       (PH) (PW)         │ └────────────┘   │
        │ Perturbation Unit │                         │  Querying Unit   │
        └────────────────────┘                        └────────────────────┘
```

# Fig. 4

**Europäisches Patentamt**
**European Patent Office**
**Office européen des brevets**

# EUROPEAN SEARCH REPORT

Application Number

EP 13 38 2266

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/053208 A1 (TRISENT COMM LTD [GB]; POVEY GORDON [GB]) 8 May 2008 (2008-05-08) * the whole document * | 1-15 | INV. H04W40/20 G01C21/34 G01S5/00 H04W4/02 H04W40/24 H04W64/00 |
| X | HAO TIAN ET AL: "A novel approach to estimate human space-time path based on mobile phone call records", GEOINFORMATICS, 2010 18TH INTERNATIONAL CONFERENCE ON, IEEE, PISCATAWAY, NJ, USA, 18 June 2010 (2010-06-18), pages 1-6, XP031750167, ISBN: 978-1-4244-7301-4 * the whole document * | 1-15 | |
| X | WO 2012/019246 A1 (SEEKER WIRELESS PTY LTD [AU]; MACNAUGHTAN MALCOLM DAVID [AU]; DRANE CH) 16 February 2012 (2012-02-16) * paragraph [0138] - paragraph [0147] * | 1-15 | |

| TECHNICAL FIELDS SEARCHED (IPC) |
|---|
| H04W G01S G01C |

The present search report has been drawn up for all claims

| Place of search | Date of completion of the search | Examiner |
|---|---|---|
| Munich | 23 October 2013 | Plata-Andres, Isabel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 13 38 2266

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2013

| Patent document cited in search report | | Publication date | Patent family member(s) | | Publication date |
|---|---|---|---|---|---|
| WO 2008053208 | A1 | 08-05-2008 | EP US WO | 2078438 A1 2010240391 A1 2008053208 A1 | 15-07-2009 23-09-2010 08-05-2008 |
| WO 2012019246 | A1 | 16-02-2012 | US WO | 2013211706 A1 2012019246 A1 | 15-08-2013 16-02-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1437013 B1

- US 2012115475 A1

### Non-patent literature cited in the description

- *Proceedings of the 10th international conference on Pervasive Computing, Pervasive'12,* 2012, 99-106

- **R. A. BECKER ; R. CACERES ; K. HANSON ; J. M. LOH ; S. URBANEK ; A. VARSHAVSKY ; C. VOLINSKY.** Route classification using cellular handoff patterns. In Proceedings of the 13th international conference on Ubiquitous computing. *UbiComp '11,* 2011, 123-132